# EUROPEAN PATENT APPLICATION

(11) **EP 4 588 742 A1**
(43) Date of publication of application: **23.07.2025**
(21) Application number: 22958318.2
(22) Date of filing: 13.09.2022
(51) Int. Cl.: B60W 20/15

(54) **CONTROL METHOD FOR HYBRID VEHICLE AND CONTROL SYSTEM FOR HYBRID VEHICLE**

(71) Applicant: NISSAN MOTOR CO., LTD., Kanagawa 221-0023 (JP)
(72) Inventor: MORIYAMA, Daiki, Atsugi-shi, Kanagawa 243-0123 (JP); AKIYAMA, Hidekatsu, Atsugi-shi, Kanagawa 243-0123 (JP); KOBAYASHI, Azusa, Atsugi-shi, Kanagawa 243-0123 (JP)
(74) Representative: Hoefer & Partner Patentanwälte mbB
(86) International application number: PCT/JP2022/034289
(87) International publication number: WO 2024/057421

(57) **Abstract**

A control method for a hybrid vehicle, wherein available input electric power to the battery 2 is set to be lower as a state of charge of the battery 2 approaches a predetermined upper limit value, when the state of charge of the battery 2 reaches near the upper limit value due to regenerative electric power received from the drive motor 1 and generated electric power received from the generator 4 and the available input electric power is smaller than a sum of the regenerative electric power and the generated electric power, a fuel supply to the engine 3 is stopped to stop power generation by the generator 4 and the regenerative electric power is consumed by supplying electric power from the battery 2 to the generator 4 to perform an electric power running operation on the engine 3, the fuel supply to the engine 3 is stopped in a case where a temperature of the catalyst is equal to or lower than a predetermined temperature for suppressing deterioration of the catalyst when the power generation request is stopped, and an output of the engine 3 is maintained by continuing the fuel supply to the engine 3 in a case where the temperature of the catalyst exceeds the predetermined temperature when the power generation request is stopped, and then the output of the engine 3 is reduced when a moving average value of a current related to the sum exceeds a predetermined reference value or when a negative electrode potential of the battery 2 is lower than a predetermined reference potential.

## Description

### TECHNICAL FIELD

The present invention relates to a control method for a hybrid vehicle and a control system for a hybrid vehicle.

### BACKGROUND ART

JPH08-144814A discloses a content that in a case where a temperature of a catalyst for purifying exhaust gas of an engine is higher than a predetermined temperature for suppressing deterioration of the catalyst, temporary fuel cutoff on the engine to reduce the deterioration of the catalyst is prohibited.

### SUMMARY OF INVENTION

Incidentally, in a hybrid vehicle, as electric power of a battery is supplied to a drive engine, an engine for power generation is driven to cause a generator to generate electric power, and as the battery is charged, exhaust gas discharged from the engine is treated by a catalyst. Therefore, also in the hybrid vehicle, in a case where a temperature of the catalyst is equal to or higher than a predetermined temperature, it is necessary to avoid control of stopping a fuel supply to the engine.

However, an available input electric power that can be input to the battery is set to be lower as it approaches an upper limit value of a state of charge of the battery for battery protection. Therefore, when the state of charge of the battery reaches near the upper limit value by supplying the generated electric power supplied from the generator and regenerative electric power generated by a drive motor to the battery and the available input electric power is lower than a sum of the generated electric power and the regenerative electric power, it is necessary to perform control of stopping the fuel supply to the engine and consuming the regenerative electric power by supplying electric power from the battery to the generator to motor the engine. On the other hand, the catalyst deteriorates when the catalyst is exposed to a lean atmosphere in a state of exceeding the predetermined temperature. Accordingly, when the fuel supply to the engine is stopped in a state in which the temperature of the catalyst exceeds the predetermined temperature, the catalyst may deteriorate.

Therefore, an object of the present invention is to provide a control method for a hybrid vehicle and a control system for a hybrid vehicle that suppress deterioration of a catalyst by avoiding motoring of an engine in a state in which a temperature of a catalyst exceeds a predetermined temperature.

According to an aspect of the present invention, there is provided a control method for a hybrid vehicle, including: exchanging electric power between a drive motor and a battery; charging the battery by a generator driven by an engine for power generation in response to a power generation request associated with a driver operation; and treating exhaust gas discharged from the engine by a catalyst. In the control method, available input electric power to the battery is set to be lower as a state of charge of the battery approaches a predetermined upper limit value, and when the state of charge of the battery reaches near the upper limit value due to regenerative electric power received from the drive motor and generated electric power received from the generator and the available input electric power is smaller than a sum of the regenerative electric power and the generated electric power, a fuel supply to the engine is stopped to stop power generation by the generator and the regenerative electric power is consumed by supplying electric power from the battery to the generator to perform an electric power running operation on the engine. The fuel supply to the engine is stopped in a case where a temperature of the catalyst is equal to or lower than a predetermined temperature for suppressing deterioration of the catalyst when the power generation request is stopped. Further, an output of the engine is maintained by continuing the fuel supply to the engine in a case where the temperature of the catalyst exceeds the predetermined temperature when the power generation request is stopped, and then the output of the engine is reduced when a moving average value of a current related to the sum exceeds a predetermined reference value or when a negative electrode potential of the battery is lower than a predetermined reference potential.

### BRIEF DESCRIPTION OF DRAWINGS

[FIG. 1] FIG. 1 is a schematic diagram of a control system for a hybrid vehicle according to the present embodiment.
[FIG. 2] FIG. 2 is a diagram illustrating a control block of the control system for a hybrid vehicle according to the present embodiment.
[FIG. 3] FIG. 3 is a first control flow of the control system for a hybrid vehicle according to the present embodiment.
[FIG. 4] FIG. 4 is a second control flow of the control system for a hybrid vehicle according to the present embodiment.
[FIG. 5] FIG. 5 is a third control flow of the control system for a hybrid vehicle according to the present embodiment.
[FIG. 6] FIG. 6 is a fourth control flow of the control system for a hybrid vehicle according to the present embodiment.
[FIG. 7] FIG. 7 is a diagram illustrating a transition of an operating point when an output of an engine is reduced in the control system for a hybrid vehicle according to the present embodiment.
[FIG. 8] FIG. 8 is a first time chart of the control system for a hybrid vehicle according to the present embodiment.
[FIG. 9] FIG. 9 is a second time chart of the control system for a hybrid vehicle according to the present embodiment.

### DESCRIPTION OF EMBODIMENTS

### [Basic Configuration of Present Embodiment]

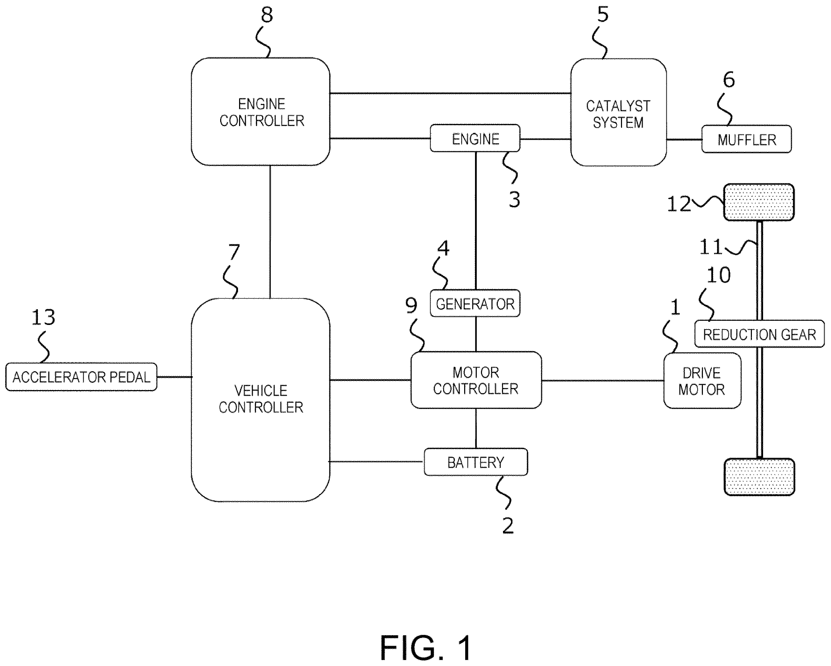

FIG. 1 is a schematic diagram of a control system for a hybrid vehicle according to the present embodiment. As illustrated in FIG. 1, the control system for a hybrid vehicle according to the present embodiment includes a drive motor 1, a battery 2, an engine 3, a generator 4, a catalyst system 5, and a control unit (vehicle controller 7, engine controller 8, and motor controller 9).

The drive motor 1 is mechanically coupled to drive wheels 12 via a reduction gear 10 and a drive shaft 11, and drives the drive wheels 12 by receiving electric power from the battery 2. In addition, the drive motor 1 generates regenerative electric power in a case where rotation of the drive wheels 12 is decelerated.

The battery 2 is, for example, a lithium ion battery, supplies electric power to the drive motor 1, and is charged with the regenerative electric power generated by the drive motor 1 and generated electric power generated by the generator 4.

The engine 3 (internal combustion engine) is, for example, a gasoline engine. The engine 3 is coupled to the generator 4 in a power transmittable manner, and causes the generator 4 to generate electric power by burning fuel (gasoline) and rotating.

The generator 4 supplies the generated electric power to the battery 2. The generator 4 may perform an electric power running operation (motoring) on the engine 3 to which a fuel supply is stopped by receiving electric power from the battery 2. The electric power running operation is used for the purpose of consuming extra regenerative electric power, as well as for cranking of the engine 3 at the start of the engine 3 and generation of negative pressure for brake pedal assist.

The catalyst system 5 treats exhaust gas discharged from the engine 3 into harmless gas, and discharges the harmless gas to the outside through a muffler 6.

The control unit (vehicle controller 7, engine controller 8, and motor controller 9) is implemented by one or a plurality of microcomputers including a central processing unit (CPU), a read-only memory (ROM), a random access memory (RAM), and an input/output interface (I/O interface). In the control unit (vehicle controller 7, engine controller 8, and motor controller 9), various kinds of control are executed by the CPU executing programs stored in the ROM or the RAM.

The vehicle controller 7 outputs a motor torque command value to the motor controller 9 based on an accelerator position (accelerator opening degree) indicated by an accelerator pedal 13.

The vehicle controller 7 outputs a power generation request for driving (power generation permission flag) to the engine controller 8 by an operation of the accelerator pedal 13 by a driver, and stops the power generation request for driving in a state when a predetermined time has elapsed after a vehicle speed becomes constant or when the vehicle speed starts to be reduced.

The vehicle controller 7 receives information on a temperature of the catalyst via the engine controller 8, and outputs a power generation request for catalyst (power generation permission flag) to the engine controller 8 when the temperature of the catalyst exceeds a predetermined temperature (for example, 700 [°C]) for suppressing deterioration of the catalyst at the time of stopping the power generation request for driving.

The vehicle controller 7 receives information on a state of charge of the battery 2, information on a negative electrode potential of the battery 2, information on the regenerative electric power supplied from the drive motor 1 to the battery 2 (regenerative electric power supplied from drive motor 1 to battery 2 by first inverter to be described later), and information on the generated electric power supplied from the generator 4 to the battery 2 (generated electric power supplied from generator 4 to battery 2 by second inverter to be described later).

In the vehicle controller 7, in order to protect the battery 2, available input electric power that can be input to the battery 2 is set in accordance with the state of charge of the battery 2.

The available input electric power is set to be, for example, when the state of charge of the battery 2 is equal to or lower than a predetermined threshold value (for example, 70 [%]), reference electric power sufficiently larger than the generated electric power (electric power at optimum fuel operating point) of the generator 4 when the engine 3 operates at an optimum fuel operating point. Here, the reference electric power is set such that, for example, a difference between the reference electric power and the electric power at optimum operating point is larger than a maximum value of regenerative electric power to be described later. On the other hand, the available input electric power starts to be reduced when the state of charge exceeds the threshold value, and is set according to a line in which the available input electric power becomes zero at an upper limit value (for example, 80 [%]) of the state of charge.

In a case where the vehicle controller 7 does not output the power generation request for catalyst, the vehicle controller 7 compares a sum of the generated electric power and the regenerative electric power with the available input electric power, and when the available input electric power is lower than the sum, stops the power generation request for driving and outputs an electric power running operation command to the motor controller 9.

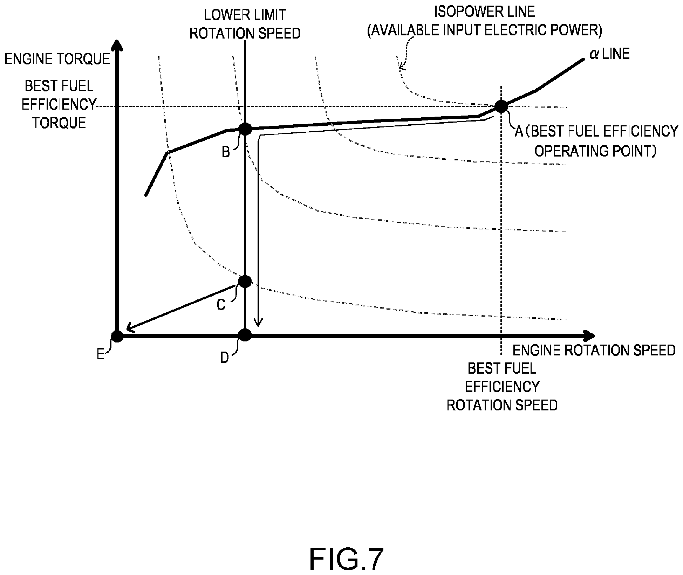

The vehicle controller 7 calculates, while outputting the power generation request for catalyst, a moving average value of a current related to the sum of the generated electric power and the regenerative electric power (for example, average value of current over 10 [s]) when the state of charge is lower than the predetermined threshold value, and when the moving average value reaches a reference value to be described later, the vehicle controller 7 reduces an output of the engine 3 in an aspect of transitioning an engine torque command value and an engine rotation speed command value along a route illustrated in FIG. 7 to be described later.

The vehicle controller 7 outputs the engine torque command value to the engine controller 8 and outputs the engine rotation speed command value to the motor controller 9. The vehicle controller 7 may output the engine rotation speed command value to the engine controller 8, and the engine controller 8 may control a torque and a rotation speed of the engine 3.

Even in a case where the power generation request for catalyst is being output, the vehicle controller 7 stops the power generation request for catalyst when the state of charge of the battery 2 reaches a predetermined upper limit value (for example, 80 [%]).

Upon receiving the power generation request for driving from the vehicle controller 7, the engine controller 8 starts the fuel supply to the engine 3 to start up the engine 3. The engine controller 8 controls the output of the engine 3 (output of generator 4) based on the engine torque command value and the engine rotation speed command value input from the vehicle controller 7.

When the power generation request for driving (power generation permission flag) and the power generation request for catalyst (power generation permission flag) input from the vehicle controller 7 are stopped, the engine controller 8 stops the fuel supply to the engine 3 to stop driving of the engine 3 (power generation by generator 4).

The engine controller 8 acquires information on a temperature of a catalyst (for example, titanium (Ti)) included in the catalyst system 5 and outputs the information to the vehicle controller 7.

The motor controller 9 controls an output of the drive motor 1 based on the motor torque command value. In addition, the motor controller 9 controls a rotation speed of the generator 4 based on the engine rotation speed command value in a case where the engine rotation speed command value from the vehicle controller 7 is received.

Upon receiving the electric power running operation command from the vehicle controller 7, the motor controller 9 drives the generator 4 using the electric power from the battery 2 and performs the electric power running operation (motoring) on the engine 3 to which the fuel supply is stopped.

The motor controller 9 includes the first inverter that connects the battery 2 and the drive motor 1, and the second inverter that connects the generator 4 and the battery 2 (and the drive motor 1). The inverters may be understood as configurations separate from the motor controller 9.

The first inverter converts DC power of the battery 2 into AC power based on the motor torque command value and outputs the AC power to the drive motor 1. In addition, in a case where the drive motor 1 generates regenerative electric power, the first inverter converts the regenerative electric power into DC power to charge the battery 2.

The second inverter converts AC power generated by the generator 4 into DC power to charge the battery 2. In addition, when the motor controller 9 receives the electric power running operation command, the second inverter converts DC power of the battery 2 into AC power and outputs the AC power to the generator 4.

### [Control Block]

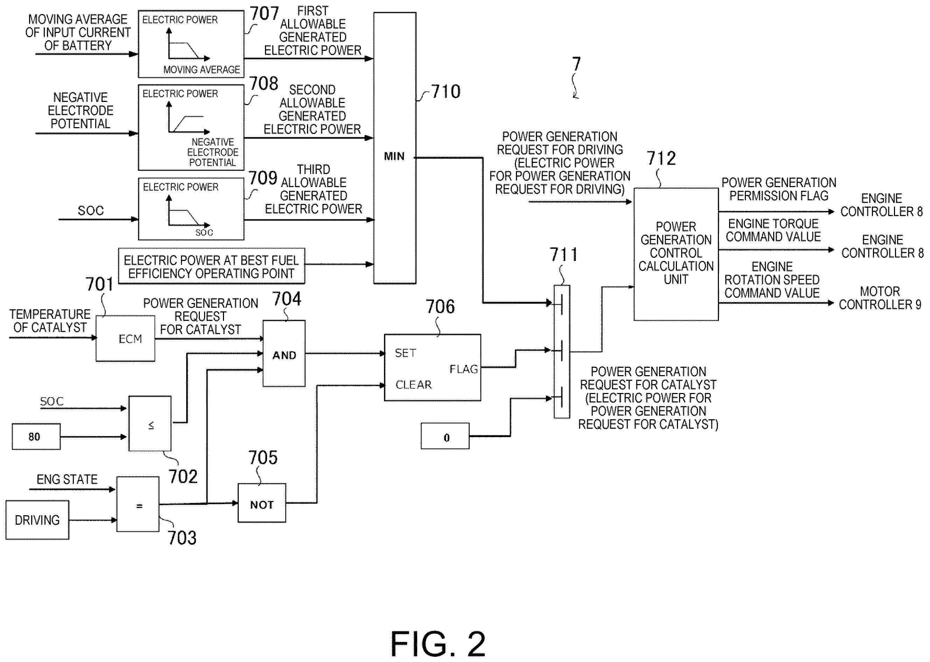

FIG. 2 is a diagram illustrating a control block of the control system for a hybrid vehicle according to the present embodiment. As illustrated in FIG. 2, the vehicle controller 7 includes a first determination element 701, a second determination element 702, a third determination element 703, a fourth determination element 704, an inversion element 705, a flag setting unit 706, a first map 707, a second map 708, a third map 709, a first electric power selection element 710, a second electric power selection element 711, and a power generation control calculation unit 712.

The first determination element 701 (or engine controller 8) detects the temperature of the catalyst, and outputs the power generation request for catalyst to the fourth determination element 704 in a case where the temperature of the catalyst exceeds the predetermined temperature (for example, 700 [°C]) for suppressing deterioration of the catalyst.

The second determination element 702 compares the state of charge (SOC) of the battery 2 with the upper limit value (for example, 80 [%]), and outputs a signal (flag) of High "1" to the fourth determination element 704 in a case where the state of charge of the battery 2 is equal to or less than the upper limit value, and outputs a signal of LOW "0" to the fourth determination element 704 in a case where the state of charge of the battery 2 exceeds the upper limit value.

The third determination element 703 determines whether the engine 3 is in a driven state, that is, whether the generator 4 is in a power generation state, and outputs a signal (flag) of High "1" to the fourth determination element 704 in a case where the engine 3 is in the driven state, and outputs a signal of LOW "0" to the fourth determination element 704 in a case where the engine 3 is stopped.

The fourth determination element 704 outputs a signal of HIGH "1" to the flag setting unit 706 when the power generation request for catalyst is input from the first determination element 701 and the signal of HIGH "1" is input from the second determination element 702 and the third determination element 703, and otherwise outputs a signal of LOW "0" to the flag setting unit 706.

The inversion element 705 inverts the signal output from the third determination element 703 and outputs the inverted signal to the flag setting unit 706.

The flag setting unit 706 inputs the signal of the fourth determination element 704 and sets the signal as a flag. In addition, the flag setting unit 706 resets the set flag (sets as LOW "0") in a case where the output from the inversion element 705 is HIGH "1".

The first map 707 is data representing a correlation between first allowable generated electric power and a moving average value of an input current (generated current and regenerative current) to the battery 2 (for example, average value of input current over 10 [s]). The first allowable generated electric power is the same value as electric power at best fuel efficiency operating point in a case where the moving average value is equal to or less than a reference value, but starts to be reduced when the moving average value exceeds the reference value, and becomes zero when the moving average value reaches a predetermined value exceeding the reference value. As a superordinate concept of the moving average value of the input current to the battery 2, there is a past history (integration amount) of the input current to the battery 2.

The second map 708 is data representing a correlation between the negative electrode potential of the battery 2 and second allowable generated electric power. The second allowable generated electric power is the same value as the electric power at best fuel efficiency operating point in a case where the negative electrode potential is equal to or higher than a reference potential (for example, 1 [V]), but starts to be reduced when the negative electrode potential is lower than the reference potential, and becomes zero when the negative electrode potential reaches a ground potential (for example, 0 [V]) lower than the reference potential. Although the negative electrode potential correlates with the state of charge of the battery 2, for example, when the negative electrode potential is 0 [V], the negative electrode potential corresponds to the upper limit value (for example, 80 [%]) of the state of charge, and when the negative electrode potential is lower than 0 [V], deposition of a metal Li may occur at a negative electrode.

The third map 709 is data representing a correlation between the state of charge of the battery 2 and third allowable generated electric power. The third allowable generated electric power is the same value as the electric power at best fuel efficiency operating point in a case where the state of charge of the battery 2 is equal to or lower than the predetermined threshold value (for example, 70 [%]), but starts to be reduced when the state of charge exceeds the threshold value (for example, 70 [%]), and becomes zero when the state of charge reaches the upper limit value (for example, 80 [%]). That is, the third allowable generated electric power is reduced in conjunction with reduction of the available input electric power, and becomes zero at the upper limit value (for example, 80 [%]).

The first allowable generated electric power, the second allowable generated electric power, and the third allowable generated electric power are appropriately set such that a sum of the regenerative electric power (maximum value) input to the battery 2 with each of the first allowable generated electric power, the second allowable generated electric power, and the third allowable generated electric power does not exceed the available input electric power of the battery 2.

The first electric power selection element 710 can output, to the second electric power selection element 711, for example, electric power having a lowest value among any of the first allowable generated electric power, the second allowable generated electric power, and the third allowable generated electric power, and the electric power at best fuel efficiency operating point.

In addition, the first electric power selection element 710 can also output, to the second electric power selection element 711, electric power having a lowest value among the first allowable generated electric power, the second allowable generated electric power, the third allowable generated electric power, and the electric power at best fuel efficiency operating point.

The second electric power selection element 711 sets electric power selected by the first electric power selection element 710 as electric power for power generation request for catalyst when a flag set by the flag setting unit 706 is HIGH "1", and selects zero as the electric power for power generation request for catalyst when the flag is LOW "0".

The electric power for power generation request for driving and the electric power for power generation request for catalyst are input to the power generation control calculation unit 712. The power generation request for driving is generated, for example, by the driver stepping on the accelerator pedal 13, and the output of the engine 3 (generated electric power of generator 4) also changes according to a stepping amount thereof. When a predetermined time has elapsed after the vehicle speed becomes constant, or in a stage in which the vehicle speed starts to be reduced, the electric power for power generation request becomes zero. The power generation request for catalyst (electric power for power generation request for catalyst) is input when the power generation request for driving (electric power for power generation request for driving) is stopped, that is, when the temperature of the catalyst exceeds the predetermined temperature (for example, 700 [°C]).

Upon receiving the power generation request for driving or the power generation request for catalyst, the power generation control calculation unit 712 outputs the power generation permission flag to the engine controller 8.

The power generation control calculation unit 712 outputs an engine torque command value based on the electric power for power generation request for driving or an engine torque command value based on the electric power for power generation request for catalyst to the engine controller 8, and outputs an engine rotation speed command value based on the electric power for power generation request for driving or an engine rotation speed command value based on the electric power for power generation request for catalyst to the motor controller 9.

### [Control Flow]

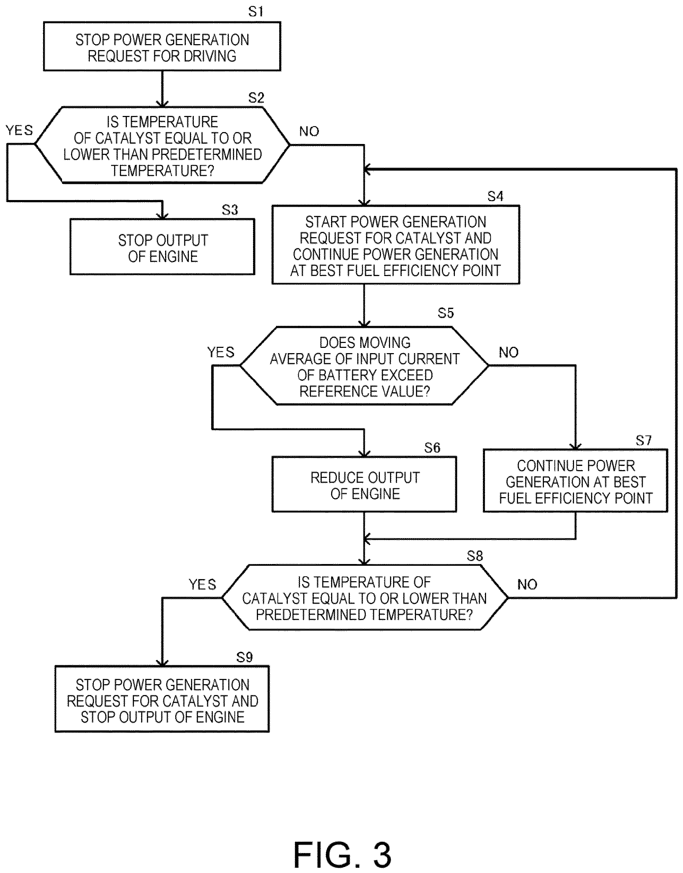

FIG. 3 is a first control flow of the control system for a hybrid vehicle according to the present embodiment. The first control flow is control using the moving average value of the input current (generated current + regenerative current) of the battery 2.

In step S1, the vehicle controller 7 stops the power generation request for driving when a predetermined time has elapsed after the vehicle speed becomes constant or in a stage in which the vehicle speed starts to be reduced.

In step S2, the vehicle controller 7 determines whether the temperature of the catalyst exceeds the predetermined temperature (for example, 700 [°C]), and when a result thereof is YES, the process proceeds to step S3, and when the result thereof is NO, the process proceeds to step S4.

In step S3, the vehicle controller 7 stops the output of the power generation permission flag to the engine controller 8, thereby stopping the fuel supply to the engine 3 to stop the output of the engine 3.

In step S4, the vehicle controller 7 (engine controller 8 and motor controller 9) starts the power generation request for catalyst and continues the power generation of the engine 3 at the best fuel efficiency operating point.

In step S5, the vehicle controller 7 determines whether the moving average value of the input current (generated current + regenerative current) of the battery 2 exceeds a reference value (reference value in first map), and when a result thereof is YES, the process proceeds to step S6, and when the result thereof is NO, the process proceeds to step S7.

In step S6, the vehicle controller 7 outputs an engine torque command value corresponding to the first allowable generated electric power to the engine controller 8 based on the moving average value and the first map 707, and outputs an engine rotation speed command value to the motor controller 9, thereby reducing the output of the engine 3.

In step S7, the vehicle controller 7 (engine controller 8 and motor controller 9) continues the power generation of the engine 3 at the best fuel efficiency operating point.

In step S8, the vehicle controller 7 determines whether the temperature of the catalyst is equal to or lower than the predetermined temperature, and when a result thereof is YES, the process proceeds to step S9, and when the result thereof is NO, the process proceeds to step S4.

In step S9, the vehicle controller 7 stops the power generation request for catalyst, sets the engine torque command value and the engine rotation speed command value to zero, and stops the power generation permission flag output to the engine controller 8, thereby stopping the output of the engine 3.

In step S5, the vehicle controller 7 may calculate whether the negative electrode potential of the battery 2 is lower than the reference potential, and when a result thereof is YES, the process proceeds to step S6, and when the result thereof is NO, the process proceeds to step S7.

Similarly, in step S6, the vehicle controller 7 may output an engine torque command value corresponding to the second allowable generated electric power to the engine controller 8 based on the value of the negative electrode potential and the second map 708, and output the engine rotation speed command value to the motor controller 9, thereby reducing the output of the engine 3.

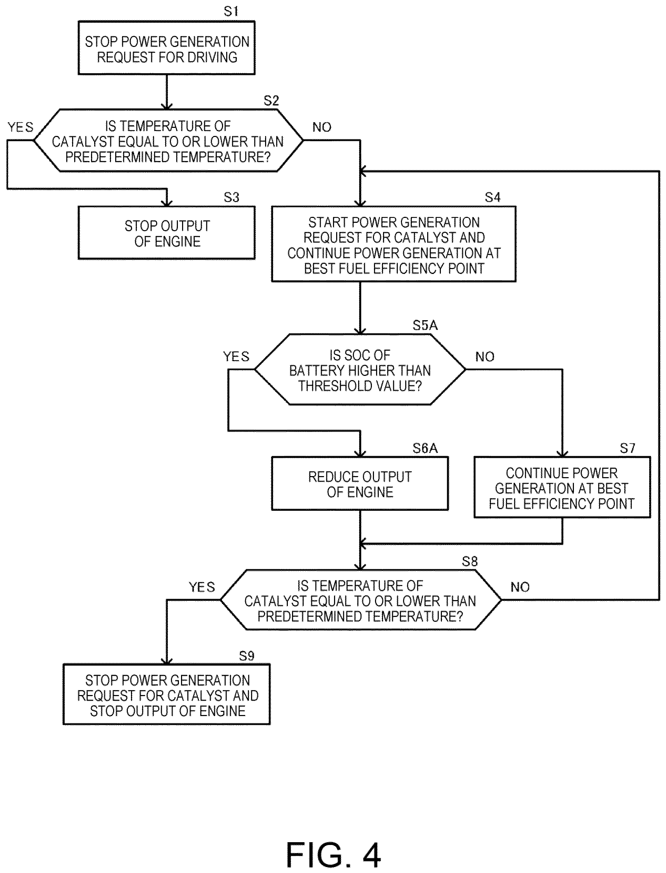

FIG. 4 is a second control flow of the control system for a hybrid vehicle according to the present embodiment. The second control flow is a flow in which the output of the engine 3 is set based on the state of charge of the battery 2 and the third map 709 (FIG. 2).

Steps S1 to S4 and S7 to S9 are common to those in the first control flow.

After step S4, in step S5A, the vehicle controller 7 determines whether the state of charge (SOC) of the battery 2 is higher than the threshold value (for example, 70 [%]), and when a result thereof is YES, the process proceeds to step S6, and when the result thereof is NO, the process proceeds to step S7.

In step S6A, the vehicle controller 7 calculates the third allowable generated electric power based on the state of charge (SOC) of the battery 2 and the third map 709 (FIG. 2), outputs an engine torque command value corresponding to the third allowable generated electric power to the engine controller 8, and outputs an engine rotation speed command value to the motor controller 9, thereby reducing the output of the engine 3.

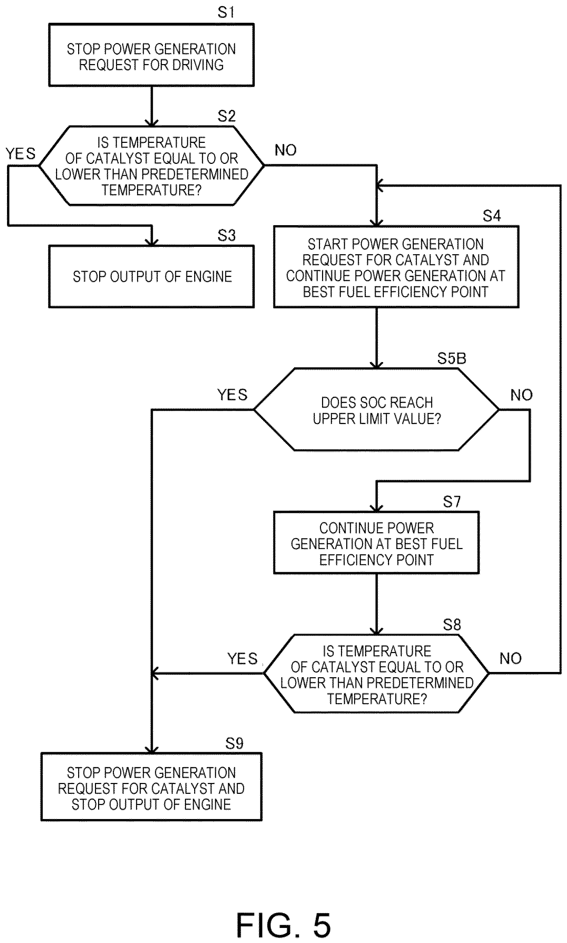

FIG. 5 is a third control flow of the control system for a hybrid vehicle according to the present embodiment. The third control flow is a flow in a case where the state of charge (SOC) of the battery 2 reaches the upper limit value (for example, 80 [%]) immediately after the power generation request for catalyst is started. In the third control flow, steps S1 to S4 and steps S7 to S9 are the same as those in the first control flow.

After step S4, in step S5B, the vehicle controller 7 determines whether the state of charge (SOC) of the battery 2 has reached the upper limit value (for example, 80 [%]), and when a result thereof is YES, the process proceeds to step S9, and when the result thereof is NO, the process proceeds to step S7.

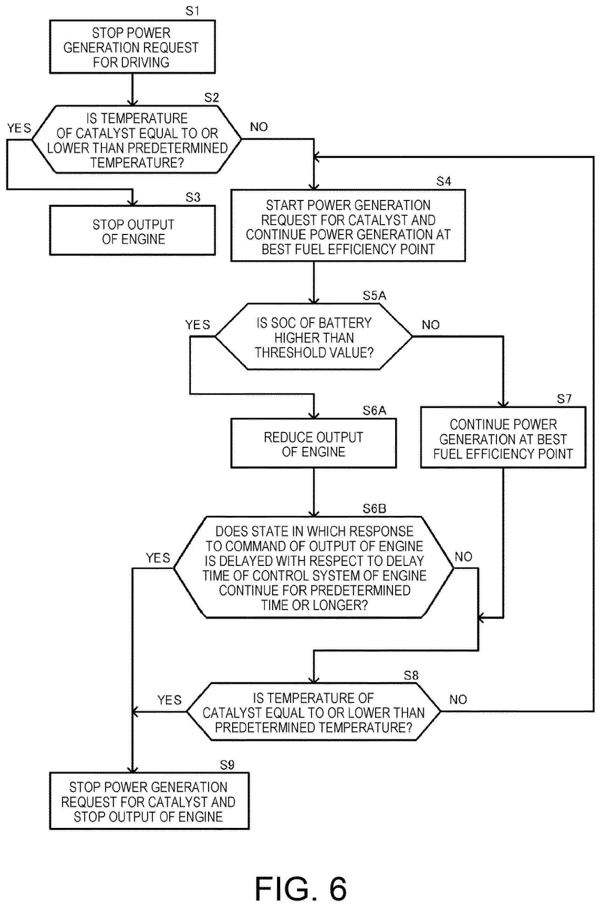

FIG. 6 is a fourth control flow of the control system for a hybrid vehicle according to the present embodiment. The fourth control flow is similar to the second control flow, but is a flow in a case where the output of the engine 3 is less likely to be reduced even when the control for reducing the output of the engine 3 is performed.

In a control system of the engine 3, there is a delay time (for example, 2 [s]) until the engine torque command value and the engine rotation speed command value are reflected as an actual engine torque and an actual engine rotation speed. However, for example, in a case where a supercharger driven by the exhaust gas from the engine 3 and configured to take in outside air is attached to the engine 3, a response to a command of the output of the engine 3 will be delayed with respect to the above-mentioned delay time, and as a result, a state in which the output (in particular, torque) is less likely to be reduced will remain, which may cause an injection up (sudden increase in rotation speed) of the engine 3. An occurrence condition of the injection up of the engine 3 is that the output of the engine 3 is smaller than a sum of the available input electric power, an electric power consumption of the vehicle (auxiliary machine), and a friction of the engine 3, and an intake manifold pressure of the engine 3 is higher than a predetermined pressure.

Therefore, in the fourth control flow, when the state in which the response (actual engine torque and actual engine rotation speed, particularly actual engine torque) to the command of the output of the engine 3 (engine torque command value and engine rotation speed command value) is delayed with respect to the above-mentioned delay time (for example, 2 [s]) continues for a predetermined time (for example, 1 [s]) or longer, control of stopping the fuel supply to the engine 3 to stop the output of the engine 3 is performed.

In the fourth control flow, step S6B is arranged between step S6A and step S8.

In step S6B, the vehicle controller 7 determines whether the state in which the response (actual engine torque and actual engine rotation speed) to the command (engine torque command value and engine rotation speed command value) of the output of the engine 3 is delayed with respect to the delay time of the control system of the engine 3 continues for the predetermined time (for example, 1 [s]) or longer, and when a result thereof is YES, the process proceeds to step S9, and when the result thereof is NO, the process proceeds to step S8. The actual engine torque is estimated based on an output current of the generator 4, and the actual engine rotation speed is measured by a rotation speed meter attached to the engine 3.

### [Operating Point of Engine 3]

FIG. 7 is a diagram illustrating a transition of an operating point when the output of the engine 3 is reduced in the control system for a hybrid vehicle according to the present embodiment. FIG. 7 shows a relation between the operating point (rotation speed,torque) of the engine 3, an α line (efficient operating line), and an isopower line (available input electric power) in a coordinate space in which the horizontal axis represents the engine rotation speed and the vertical axis represents the engine torque.

The isopower line illustrated in FIG. 7 displays the available input electric power with respect to the battery 2 in the coordinate space, with the available input electric power being reduced as approaching an origin of the coordinate space.

In the present embodiment, an operating point (A) of the engine 3 is initially set to the best fuel efficiency operating point related to a best fuel efficiency rotation speed (for example, 2,000 [rpm]) and a best fuel efficiency torque.

In a case where the state of charge (SOC) of the battery 2 is equal to or lower than the threshold value (for example, 70 [%]), the isopower line representing the available input electric power is disposed at a position higher than (A), but when the state of charge is higher than the threshold value, the isopower line moves toward an origin side and (A) is located at a position higher than the isopower line representing the available input electric power, and the electric power becomes greater than the electric power represented by the isopower line.

Therefore, in the present embodiment, the operating point is caused to move along the α line (efficient operating line representing trace of rotation speed and torque at which fuel efficiency is minimized) including the best fuel efficiency operating point (A) in accordance with a change (reduction in available input electric power) of the isopower line representing the available input electric power. When the operating point reaches an operating point (B) which is a lower limit rotation speed (variable) in the control system of the engine 3, the torque is reduced in a state in which the rotation speed is maintained, and the operating point is finally set to the operating point (D) at which the torque is zero.

At the operating point (D), the state of charge of the battery 2 reaches the upper limit value (for example, 80 [%]), the generator 4 does not generate electric power, and the engine 3 rotates following rotation of the generator 4. By reducing the output (product of rotation speed and torque) of the engine 3 in this manner, the temperature of the catalyst can be reduced in a state in which the catalyst does not in a lean atmosphere.

However, for example, every time the output (torque command value) of the engine 3 is reduced from the operating point (B) to the operating point (D), the output (actual torque) of the engine 3 as the response thereof is not sufficiently reduced even after the delay time of the control system of the engine has elapsed as described above, and an actual operating point may be located at a position higher than the isopower line. In this case, as described above, the input electric power (regenerative electric power + generated electric power) of the battery 2 is higher than the available input electric power, and in order to consume the remaining electric power, there is a concern that the injection up (sudden increase in rotation speed) of the engine 3 is generated.

Therefore, in the present embodiment, in a case where it is determined that there is the concern described above at an operating point (C) between the operating point (B) and the operating point (D), that is, in a case where it is determined that the state in which the response (actual engine torque and actual engine rotation speed) to the command (engine torque command value and engine rotation speed command value) of the output of the engine 3 is delayed with respect to the delay time of the control system of the engine 3 continues for the predetermined time (for example, 1 [s]) or longer, the fuel supply to the engine 3 is stopped and the operating point of the engine 3 is set to the operating point (D) (origin). Accordingly, the injection up (sudden increase in rotation speed) of the engine 3 is suppressed. Even when the temperature of the catalyst is higher than the predetermined temperature (for example, 700 [°C]) when the output of the engine 3 is stopped, it is not necessary to perform the power generation request for catalyst again.

### [First Time Chart]

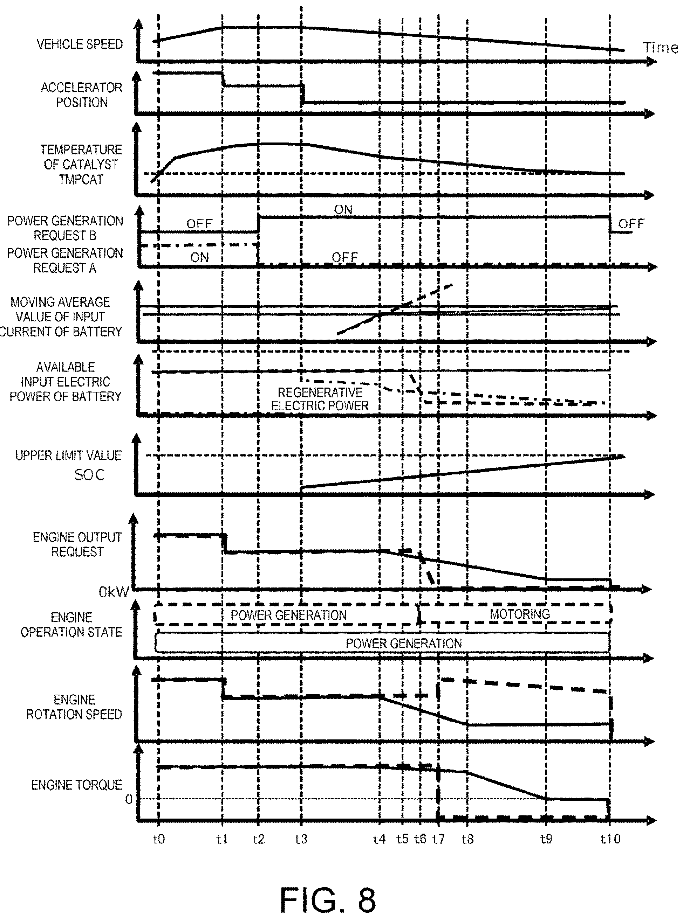

FIG. 8 is a first time chart of the control system for a hybrid vehicle according to the present embodiment. Here shows a time chart in a case where the temperature of the catalyst exceeds the predetermined temperature (for example, 700 [°C]) for suppressing deterioration of the catalyst at the time of acceleration of the vehicle, and the state of charge (SOC) of the battery 2 reaches near the upper limit value (for example, 80 [%]) in a stage in which the vehicle speed starts to be reduced after that to limit the available input electric power to the battery 2. In addition, the first time chart shows a case where an engine output request (engine torque command value and engine rotation speed command value) is controlled based on the moving average value (first allowable generated electric power in FIG. 2) of the input current to the battery 2.

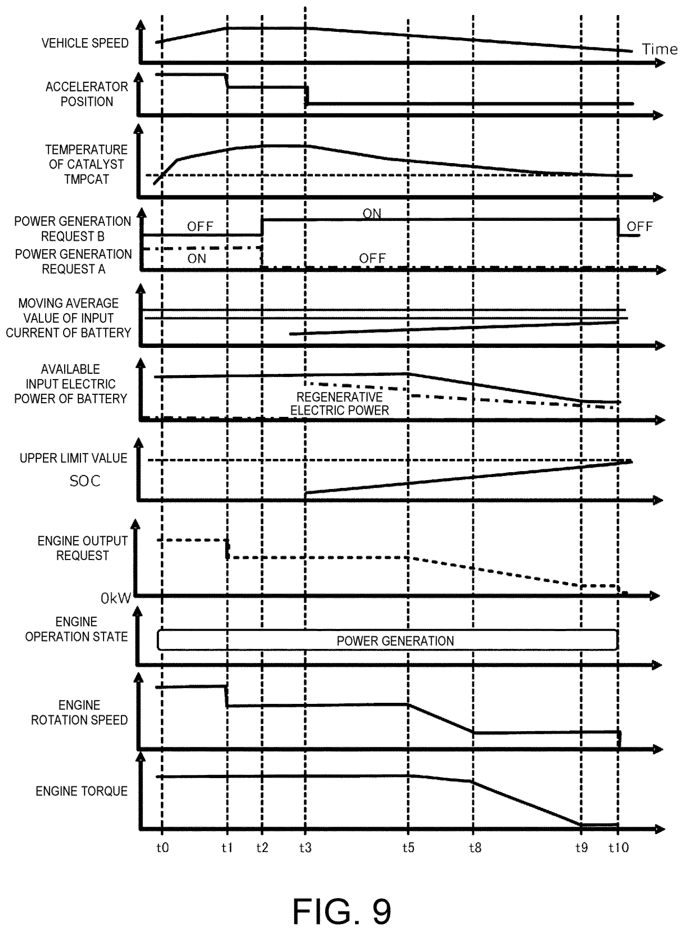

At a time t0, the vehicle is accelerating and the power generation request for driving (power generation request A in FIG. 9) is in an ON state, and the engine 3 operates at an operating point at which the output is higher than that at the best fuel efficiency operating point based on the accelerator position.

At a time t1, the driver reduces the accelerator position and the vehicle speed becomes constant, and the engine 3 operates at the best fuel efficiency operating point (operating point (A) in FIG. 7).

At a time t2 at which a predetermined time has elapsed from the time t1, the vehicle controller 7 sets the power generation request for driving (power generation request A) to an OFF state. However, since the temperature of the catalyst exceeds the predetermined temperature (for example, 700 [°C]) at the time t2, the power generation request for catalyst (power generation request B) is set to an ON state at the same time as the power generation request for driving (power generation request A) is set to the OFF state.

At a time t3, the driver further reduces the accelerator position to reduce the vehicle speed, thereby generating regenerative electric power. Since the power generation request for catalyst (power generation request B) is in the ON state, the output of the engine 3 continues to operate at the best fuel efficiency operating point (operating point (A) in FIG. 7) regardless of the accelerator position.

After the time t3 has elapsed, the battery 2 is charged with the regenerative electric power, and the moving average value of the input current to the battery 2 starts to increase.

At a time t4, when the moving average value of the input current to the battery 2 exceeds the reference value (reference value in first map 707), the engine output request (engine torque command value and engine rotation speed command value) is set based on the first allowable generated electric power, thereby reducing the output of the engine 3 (generated electric power of generator 4). The first allowable generated electric power is set so as to sensitively respond to an increase in the moving average value and be greatly reduced at a stage in which the moving average value exceeds the reference value, and the output of the engine 3 (generated electric power of generator 4) is also greatly reduced accordingly. The reference value is set to a value that the moving average value reaches before the available input electric power starts to be limited based on the state of charge of the battery 2. Accordingly, an increase in the moving average value is suppressed after the time t4. When the output of the engine 3 is reduced, the output of the engine 3 is reduced from the best fuel efficiency operating point along the α line illustrated in FIG. 7.

At a time t8, the engine rotation speed reaches the lower limit rotation speed (operating point (B) in FIG. 7).

At a time t9, the engine torque reaches zero (operating point (D) in FIG. 7).

At a time t10, when the temperature of the catalyst becomes equal to or lower than the predetermined temperature (for example, 700 [°C]), the vehicle controller 7 sets the power generation request for catalyst (power generation request B) to an OFF state, and the engine controller 8 stops the fuel supply to the engine 3 to stop the output of the engine 3.

In the present embodiment, an operation state of the engine 3 is a power generation state from the time t0 to the time t10. That is, in the present embodiment, by continuously reducing the temperature of the catalyst until the temperature of the catalyst becomes equal to or lower than the predetermined temperature (for example, 700 [°C]) while reducing the output of the engine 3 (generated electric power of generator 4) in accordance with the available input electric power that is reduced with an increase in the state of charge of the battery 2, the catalyst is reduced to the predetermined temperature (for example, 700 [°C]) without being exposed to the lean atmosphere, thereby suppressing deterioration of the catalyst.

On the other hand, in a case where the operation at the best fuel efficiency operating point is continued without reducing the output of the engine 3 as described above after the time t4, the moving average value (broken line) continues to increase. At a time t5, the available input electric power (broken line) is reduced together with the increase in the state of charge (SOC) of the battery 2. At a time t6, when the available input electric power (broken line) becomes lower than the sum of the regenerative electric power (broken line) and the generated electric power (not illustrated in FIG. 8), the engine controller 8 (vehicle controller 7) stops the fuel supply to the engine 3, thereby shifting the operation state of the engine 3 from the power generation state to a motoring state. At a time t7, when the engine output request becomes zero, the engine rotation speed (broken line) increases and the engine torque (broken line) becomes negative. In this case, since the catalyst is exposed to the lean atmosphere in a state in which the temperature of the catalyst still exceeds the predetermined temperature (700 [°C]), the deterioration of the catalyst cannot be suppressed.

### [Second Time Chart]

FIG. 9 is a second time chart of the control system for a hybrid vehicle according to the present embodiment. An application scene of the second time chart is the same as that of the first time chart, but the engine output request (engine torque command value and engine rotation speed command value) is controlled based on the state of charge of the battery 2 and the third map 709 (third allowable generated electric power in FIG. 2).

In the second time chart, operations at a time t0 to a time t3 and a time t8 to a time t10 are the same as those in the first time chart.

At a time t5, when the available input electric power to the battery 2 starts to be reduced, the third allowable generated electric power (FIG. 2) is reduced in conjunction with the reduction, thereby reducing the engine output request (engine torque command value and engine rotation speed command value). In this manner, since the output of the engine 3 (generated electric power of generator 4) is also reduced in conjunction with the reduction in the available input electric power, cases where the sum of the regenerative electric power and the generated electric power is larger than the available input electric power are reduced.

In the first time chart and the second time chart, for example, in a case where the state of charge (SOC) of the battery 2 reaches the upper limit value (for example, 80 [%]) before the temperature of the catalyst becomes equal to or lower than a predetermined temperature (for example, 700 [°C]), the vehicle controller 7 sets the power generation request for catalyst (power generation request B) (power generation permission flag) to the OFF state, and the motor controller 9 stops the fuel supply to the engine 3 to stop the output of the engine 3 (power generation by generator 4).

When the output of the engine 3 is reduced (in particular, during time t8 to time t9), in a case where the state in which the response (actual engine torque and actual engine rotation speed, in particular, actual engine torque) to the command of the output of the engine 3 (engine torque command value and engine rotation speed command value) is delayed with respect to the delay time of the control system of the engine 3 continues for the predetermined time (for example, 1 [s]) or longer, control of the engine controller 8 (vehicle controller 7) stopping the fuel supply to the engine 3 to stop the output of the engine 3 is performed.

### [Effects of Present Embodiment]

According to the control method for a hybrid vehicle of the present embodiment, the control method includes: exchanging electric power between the drive motor 1 and the battery 2; charging the battery 2 by the generator 4 driven by the engine 3 for power generation in response to the power generation request (power generation request for driving) associated with a driver operation; and treating exhaust gas discharged from the engine 3 by the catalyst (catalyst system 5). In the control method, the available input electric power to the battery 2 is set to be lower as the state of charge (SOC) of the battery 2 approaches the predetermined upper limit value (for example, 80 [%]), when the state of charge (SOC) of the battery 2 reaches near the upper limit value (for example, 80 [%]) due to the regenerative electric power received from the drive motor 1 and the generated electric power received from the generator 4, and the available input electric power is smaller than the sum of the regenerative electric power and the generated electric power, the fuel supply to the engine 3 is stopped to stop the power generation by the generator 4 and the regenerative electric power is consumed by supplying the electric power from the battery 2 to the generator 4 to perform the electric power running operation on the engine 3, the fuel supply to the engine 3 is stopped in a case where the temperature of the catalyst (catalyst included in catalyst system 5) is equal to or lower than the predetermined temperature (for example, 700 [°C]) for suppressing deterioration of the catalyst when the power generation request (power generation request for driving) is stopped, and the output of the engine 3 is maintained by continuing the fuel supply to the engine 3 in a case where the temperature of the catalyst (catalyst included in catalyst system 5) exceeds the predetermined temperature (for example, 700 [°C]) when the power generation request (power generation request for driving) is stopped, and then the output of the engine 3 is reduced when the moving average value of a current related to the sum exceeds a predetermined reference value or when the negative electrode potential of the battery 2 is lower than a predetermined reference potential.

According to the above-mentioned method, by appropriately setting the reference value or a reference voltage, it is possible to continue the output of the engine 3 until the temperature of the catalyst becomes equal to or lower than the predetermined temperature (for example, 700 [°C]) while reducing the output of the engine 3 (generated electric power of generator 4) in accordance with the available input electric power that is reduced with an increase in the state of charge of the battery 2. Therefore, the deterioration of the catalyst can be suppressed by lowering the temperature of the catalyst to the predetermined temperature (for example, 700 [°C]) without performing the motoring of the engine 3, that is, without exposing the catalyst to the lean atmosphere.

According to the control method for a hybrid vehicle of the present embodiment, the control method includes: exchanging electric power between the drive motor 1 and the battery 2; charging the battery 2 by the generator 4 driven by the engine 3 for power generation in response to the power generation request (power generation request for driving) associated with a driver operation; and treating exhaust gas discharged from the engine 3 by the catalyst (catalyst system 5). In the control method, the available input electric power to the battery 2 is set to be lower as the state of charge (SOC) of the battery 2 approaches the predetermined upper limit value (for example, 80 [%]), when the state of charge (SOC) of the battery 2 reaches near the upper limit value (for example, 80 [%]) due to the regenerative electric power received from the drive motor 1 and the generated electric power received from the generator 4 and the available input electric power is smaller than the sum of the regenerative electric power and the generated electric power, the fuel supply to the engine 3 is stopped to stop the power generation by the generator 4 and the regenerative electric power is consumed by supplying the electric power from the battery 2 to the generator 4 to perform the electric power running operation on the engine 3, the fuel supply to the engine 3 is stopped in a case where the temperature of the catalyst (catalyst included in catalyst system 5) is equal to or lower than the predetermined temperature (for example, 700 [°C]) for suppressing deterioration of the catalyst when the power generation request (power generation request for driving) is stopped, and the output of the engine 3 is maintained by continuing the fuel supply to the engine 3 in a case where the temperature of the catalyst (catalyst included in catalyst system 5) exceeds the predetermined temperature (for example, 700 [°C]) when the power generation request (power generation request for driving) is stopped, and then the output of the engine 3 is reduced based on a change in the available input electric power (state of charge of battery 2 and third map 709 (FIG. 2)).

According to the above-mentioned method, since the output of the engine 3 (generated electric power of generator 4) is also immediately reduced when the available input electric power starts to be reduced, the cases where the sum of the regenerative electric power and the generated electric power is larger than the available input electric power are reduced, and the output of the engine 3 can be continued until the temperature of the catalyst becomes equal to or lower than the predetermined temperature (for example, 700 [°C]). Therefore, the deterioration of the catalyst can be suppressed by lowering the temperature of the catalyst to the predetermined temperature (for example, 700 [°C]) without performing the motoring of the engine 3, that is, without exposing the catalyst to the lean atmosphere.

In the present embodiment, when the state of charge (SOC) of the battery 2 exceeds the upper limit value (for example, 80 [%]), the output of the engine 3 is stopped.

Accordingly, deterioration of the battery 2 can be suppressed.

In the present embodiment, the output of the engine 3 is controlled based on the rotation speed command value and the torque command value, and the output of the engine 3 is stopped in a case where the state in which the response to the rotation speed command value and the torque command value is delayed with respect to the delay time of the control system of the engine 3 continues for the predetermined time or longer during the reduction of the output of the engine 3.

According to the above-mentioned method, the injection up of the engine 3 (sudden increase in rotation speed of engine 3) can be prevented. When the output of the engine 3 is reduced, the rotation speed command value and the torque command value are reduced from the best fuel efficiency operating point based on an efficient operating line (a line) that includes the best fuel efficiency operating point at which an output efficiency of the engine 3 is maximized in a coordinate space having the rotation speed of the engine 3 and the torque of the engine 3 as axes and is represented as a trace of the efficient operating point when the output of the engine 3 is reduced, and then the torque command value is reduced to zero in a state in which the rotation speed is maintained when the rotation speed reaches a predetermined lower limit rotation speed.

According to the control system for a hybrid vehicle of the present embodiment, the control system includes: the drive motor 1; the battery 2 configured to exchange electric power with the drive motor 1; the generator 4 driven by the engine 3 for power generation and configured to generate electric power in response to the power generation request (power generation request for driving) associated with a driver operation to charge the battery 2; the catalyst (catalyst system 5) for treating exhaust gas discharged from the engine 3; and the control unit (vehicle controller 7, engine controller 8, and motor controller 9) configured to control the battery 2, the engine 3, and the generator 4. In the control system, the available input electric power to the battery 2 is set to be lower as the state of charge (SOC) of the battery 2 approaches the predetermined upper limit value (for example, 80 [%]), the control unit (vehicle controller 7, engine controller 8, and motor controller 9) is configured to, when the state of charge of the battery 2 reaches near the upper limit value (for example, 80 [%]) due to the regenerative electric power received from the drive motor 1 and the generated electric power received from the generator 4 and the available input electric power is smaller than the sum of the regenerative electric power and the generated electric power, stop the fuel supply to the engine 3 to stop the power generation by the generator 4, and supply electric power from the battery 2 to the generator 4 to perform the electric power running operation on the engine 3 such that the regenerative electric power is consumed, and the control unit (vehicle controller 7, engine controller 8, and motor controller 9) is further configured to stop the fuel supply to the engine 3 in a case where the temperature of the catalyst (catalyst included in catalyst system 5) is equal to or lower than the predetermined temperature (for example, 700 [°C]) for suppressing deterioration of the catalyst when the power generation request (power generation request for driving) is stopped, and maintain the output of the engine 3 by continuing the fuel supply to the engine 3 in a case where the temperature of the catalyst (catalyst included in catalyst system 5) exceeds the predetermined temperature (for example, 700 [°C]) when the power generation request is stopped, and then reduce the output of the engine 3 when the moving average value of a current related to the sum exceeds a predetermined reference value or when the negative electrode potential of the battery 2 is lower than a predetermined reference potential.

According to the above-mentioned configuration, by appropriately setting the reference value or a reference voltage, it is possible to continue the output of the engine 3 until the temperature of the catalyst becomes equal to or lower than the predetermined temperature (for example, 700 [°C]) while reducing the output of the engine 3 (generated electric power of generator 4) in accordance with the available input electric power that is reduced with an increase in the state of charge of the battery 2. Therefore, the deterioration of the catalyst can be suppressed by lowering the temperature of the catalyst to the predetermined temperature (for example, 700 [°C]) without performing the motoring of the engine 3, that is, without exposing the catalyst to the lean atmosphere.

Although the embodiments of the present invention have been described above, the above embodiments merely exemplify some of application examples of the present invention and do not intend to limit the technical scope of the present invention to the specific configurations of the above embodiments. The above embodiment can be combined as appropriate.

## Claims

1. A control method for a hybrid vehicle, comprising: exchanging electric power between a drive motor and a battery; charging the battery by a generator driven by an engine for power generation in response to a power generation request associated with a driver operation; and treating exhaust gas discharged from the engine by a catalyst, wherein
available input electric power to the battery is set to be lower as a state of charge of the battery approaches a predetermined upper limit value,
when the state of charge of the battery reaches near the upper limit value due to regenerative electric power received from the drive motor and generated electric power received from the generator and the available input electric power is smaller than a sum of the regenerative electric power and the generated electric power, a fuel supply to the engine is stopped to stop power generation by the generator and the regenerative electric power is consumed by supplying electric power from the battery to the generator to perform an electric power running operation on the engine,
the fuel supply to the engine is stopped in a case where a temperature of the catalyst is equal to or lower than a predetermined temperature for suppressing deterioration of the catalyst when the power generation request is stopped, and
an output of the engine is maintained by continuing the fuel supply to the engine in a case where the temperature of the catalyst exceeds the predetermined temperature when the power generation request is stopped, and then the output of the engine is reduced when a moving average value of a current related to the sum exceeds a predetermined reference value or when a negative electrode potential of the battery is lower than a predetermined reference potential.

2. A control method for a hybrid vehicle, comprising: exchanging electric power between a drive motor and a battery; charging the battery by a generator driven by an engine for power generation in response to a power generation request associated with a driver operation; and treating exhaust gas discharged from the engine by a catalyst, wherein
available input electric power to the battery is set to be lower as a state of charge of the battery approaches a predetermined upper limit value,
when the state of charge of the battery reaches near the upper limit value due to regenerative electric power received from the drive motor and generated electric power received from the generator and the available input electric power is smaller than a sum of the regenerative electric power and the generated electric power, a fuel supply to the engine is stopped to stop power generation by the generator and the regenerative electric power is consumed by supplying electric power from the battery to the generator to perform an electric power running operation on the engine,
the fuel supply to the engine is stopped in a case where a temperature of the catalyst is equal to or lower than a predetermined temperature for suppressing deterioration of the catalyst when the power generation request is stopped, and
an output of the engine is maintained by continuing the fuel supply to the engine in a case where the temperature of the catalyst exceeds the predetermined temperature when the power generation request is stopped, and then the output of the engine is reduced based on a change in the available input electric power.

3. The control method for a hybrid vehicle according to claim 1 or 2, wherein
the output of the engine is stopped when the state of charge of the battery exceeds the upper limit value.

4. The control method for a hybrid vehicle according to claim 1 or 2, wherein
the output of the engine is controlled based on a rotation speed command value and a torque command value, and
the output of the engine is stopped in a case where a state in which a response to the rotation speed command value and the torque command value is delayed with respect to a delay time of a control system of the engine continues for a predetermined time or longer in the middle of reducing the output of the engine.

5. A control system for a hybrid vehicle, comprising:
a drive motor;
a battery configured to exchange electric power with the drive motor;
a generator driven by an engine for power generation and configured to generate power in response to a power generation request associated with a driver operation to charge the battery;
a catalyst for treating exhaust gas discharged from the engine; and
a control unit configured to control the battery, the engine, and the generator, wherein
available input electric power to the battery is set to be lower as a state of charge of the battery approaches a predetermined upper limit value,
the control unit is configured to, when the state of charge of the battery reaches near the upper limit value due to regenerative electric power received from the drive motor and generated electric power received from the generator and the available input electric power is smaller than a sum of the regenerative electric power and the generated electric power, stop a fuel supply to the engine to stop power generation by the generator, and supply electric power from the battery to the generator to perform an electric power running operation on the engine such that the regenerative electric power is consumed, and
the control unit is further configured to
stop the fuel supply to the engine in a case where a temperature of the catalyst is equal to or lower than a predetermined temperature for suppressing deterioration of the catalyst when the power generation request is stopped, and
maintain an output of the engine by continuing the fuel supply to the engine in a case where the temperature of the catalyst exceeds the predetermined temperature when the power generation request is stopped, and then reduce the output of the engine when a moving average value of a current related to the sum exceeds a predetermined reference value or when a negative electrode potential of the battery is lower than a predetermined reference potential.
